# EUROPEAN PATENT SPECIFICATION

(11) **EP 3 564 572 B1**
(45) Date of publication and mention of the grant of the patent: **07.07.2021**
(21) Application number: 19172279.2
(22) Date of filing: 02.05.2019
(51) Int. Cl.: F16M 11/10, F16M 11/20, F16M 11/24, F16M 13/02

(54) **DEVICE FOR MOUNTING A VIEWING SCREEN SO AS TO BE DISPLACEABLE WITH RESPECT TO THE OUTSIDE WORLD**
VORRICHTUNG ZUR MONTAGE EINES BILDSCHIRMS, DER IN BEZUG AUF DIE AUSSENWELT VERSCHIEBBAR IST
DISPOSITIF DE MONTAGE D'UN ÉCRAN DE VISUALISATION DE MANIÈRE À POUVOIR ÊTRE DÉPLACÉE PAR RAPPORT AU MONDE EXTÉRIEUR

(30) Priority: 04.05.2018 NL 2020883
(43) Date of publication of application: 06.11.2019
(73) Proprietor: In 2 Home B.V., 5384 PT Heesch (NL)
(72) Inventor: LANGIUS, Roelof Hendrik, 5384 PT Heesch (NL)
(74) Representative: Patentwerk B.V.

(56) References cited:
- DE-U1-202017 107 086
- US-A1- 2012 228 440
- US-A1- 2017 191 607

## Description

The present invention relates to a device for mounting a viewing screen so as to be displaceable with respect to the outside world. The outside world may in this case be, for example, the top of a desk or another surface, or a wall to which the device is attached. Such devices, also referred to as "monitor arms", are known for supporting viewing screens, for example televisions or computer monitors. Many variants are known, with some variants offering the opportunity to displace the viewing screen with respect to the outside world. These displacements usually comprise height adjustments by means of translations or rotations about horizontal or vertical axes in order to turn the screen towards a user in a certain way, which offers the advantage of a comfortable and/or healthy working posture for the user.

The more degrees of freedom (possibilities for translation and/or rotation) there are, the more movable the viewing screen becomes and also the greater the risk of surrounding objects inadvertently being hit thereby, which may result in damage to the viewing screen or the respective objects, and generally to undesirable situations.

The US patent application US2017/0191607 as well as the German patent application DE202017107086 disclose a device for mounting a viewing screen. However, the methods for limiting the degrees of freedom is rather complex and for that reason not desired.
It is therefore an object of the present invention to provide a device for mounting a viewing screen so as to be displaceable with respect to the outside world which does not have the abovementioned drawbacks.

To this end, the present invention presents a device for mounting a viewing screen so as to be displaceable with respect to the outside world, comprising a supporting structure, for positioning a first hinge part with respect to the outside world, a mounting element configured to be attached to a viewing screen, provided with a second hinge part which can be rotatably connected to the first hinge part, wherein a rotation angle through which the mounting element is rotatable with respect to the supporting structure in a connected position of the first and second hinge part is limited, and wherein the magnitude of the limited rotation angle is adjustable. Compared to the prior art, the device according to the invention offers the advantage that the freedom of movement of the viewing screen can be limited, which has the advantage that unintended pivoting is prevented and the risk of damage of the screen is limited. In addition, this increases the ease of operation of the screen.

According to the invention, the magnitude of the limited rotation angle is determined by a position of a displaceable stop which limits the freedom of movement of a cam, wherein the first hinge part is provided with the displaceable stop and the second hinge part is provided with the cam, or a mechanical reversal thereof, that is to say that the second hinge part is provided with the displaceable stop and the first hinge part is provided with the cam.

The displaceable stop forms a robust embodiment which is simple to produce. In this (these) embodiment(s), the point at which the cam hits the stop during rotation denotes the outermost point of the rotation of the mounting element and thus of the viewing screen. It is true for all embodiments that the movable stop may be connected to a connecting member, which is accessible in the connected or non-connected position of the hinge parts for operation.

In a preferred embodiment, the first hinge part comprises a socket and the second hinge part comprises a pin, configured to be accommodated in the socket, or again a mechanical reversal, wherein the second hinge part comprises a socket and the first hinge part comprises a pin, configured to be accommodated in the socket. This embodiment makes mounting and demounting very simple, and also offers the possibility of modifying the configuration at any desired moment and without the use of tools.

The displaceable stop comprises a pin which is axially displaceable with respect to a bore hole, in particular a pin which can be axially screwed into and out of the bore hole. Using this construction, wherein the bore holes are at discrete points, it is also possible to establish discrete positions for the angular rotation. A screw connection also helps to secure the pin, so that it cannot fall out of the construction unintentionally. It is for example possible to opt for the pin to be provided with a slot at the top for the purpose of positioning a screwdriver, a crosshead or a socket head. The pin may be (completely) removable from the bore hole, so that one pin can be used in several positions. To this end, several bore holes in which the pin can be placed or in which various pins can be placed may also be present.

In a further preferred embodiment of the present invention, the peripheral wall of the pin forms the stop. As a result thereof, the force which the cam exerts on the stop is directed against the peripheral wall, and not against the end side. This prevents the setting from changing during use.

The device according to the invention may form a modular system together with further parts. Such a modular system comprises several parts, wherein the first and second hinge parts of the respective parts are in each case of a matching type. Therefore, the invention relates to a device as described above, wherein the first hinge part and the second hinge part are connected to each other by way of at least one connecting piece, wherein the connecting piece comprises both a pin configured to be accommodated in a socket and a socket configured for receiving a pin.

One particular embodiment relates to a connecting piece which also provides a height adjustment. Such a connecting piece may comprise a parallelogram construction which is known per se, provided with first and second hinge parts according to the present invention. Such a parallelogram may furthermore be of a balanced design. In particular, a spring, such as a gas spring, may be provided to this end, preferably provided with an adjustment mechanism for the balancing force exerted by the spring spring. In an embodiment of the present invention, an adjustable gas spring is provided which is suitable for compensating for a weight of between 2 and 12 kg.

The device according to the invention has various possible uses and areas of application. In a first embodiment, the supporting structure comprises a body which can be connected to a vertical wall. By means thereof, the device may be connected, for example, to a wall.

In a subsequent embodiment, the supporting structure comprises a base in order to rest on a surface or a connecting element for connecting to a surface comprises, provided with a vertically extending spacing element for positioning the first hinge part at a distance from the surface. Such a surface may be a floor, but will often also be the top of a desk. In this case, the purpose of a support is to enable installation in such a way that it can easily be released, and a connecting element comprises a clamp, for example.

In order to be able not only to perform rotations, but in particular also to be able to determine the height of the viewing screen with respect to the outside world, the first hinge part may be provided on a glider which is connected to the spacing element so as to be moved in translation in the longitudinal direction of the spacing element.

In this case, the glider is advantageously provided with a lock, for blocking or unblocking, respectively, translation in the longitudinal direction. In a particularly advantageous embodiment thereof, the spacing element is provided with a slot which extends from an outer wall of the spacing element towards the inside and whose diameter from the outer wall towards the inside comprises a widened section, and wherein the glider comprises a slider, having a width which is larger than the smallest diameter of the slot, wherein the glider comprises a friction element which is configured to glide along an outer surface of the spacing element, wherein the slider is arranged in the slot and wherein locking comprises mutually displacing the friction element and the slider towards each other with a directional component. Locking may also comprise mutually displacing the friction element and the slider past each other with a directional component.

In yet a further embodiment, the device according to the invention is provided with a carrier for connecting further auxiliary means or peripheral equipment, provided with a slider which is configured to be accommodated in the slot of the spacing element. In this way, the carrier can be attached to the spacing element at a desired height and be positioned in such a way that the peripheral equipment is kept at a desired height. Such a carrier for connecting further auxiliary means or peripheral equipment may comprise electrical connections, such as a mains voltage power supply, such as a power distribution unit, and may to this end itself be provided with a plug for electrical connection. Low-voltage power supplies, such as a USB charging connection, may also be present. In order to provide a charging connection, the carrier may comprise a transformer to convert the mains voltage to 5 volt direct voltage.

In addition, a converter may be present in order to generate an induction-charging field for charging telephones, tablets or laptops which support induction charging. The device according to the invention may a be provided with a holder for a telephone or laptop, in particular configured to support the telephone on laptop (mechanically) as well.

Preferably, the carrier is designed so that it may be constructed in a modular way and may optionally be provided with the electrical connections or holders for peripheral equipment desired by a user. To this end, the carrier may be provided with a rail, in which modules can slide in order to connect further auxiliary means or which comprise electrical connections.

The invention will now be explained in more detail with reference to the following figures, in which:
- Fig. 1 shows an overall view of a device according to the invention;
- Fig. 2 shows a first view of a glider with a first hinge part according to the invention;
- Fig. 3 shows a detail of a second hinge part according to the invention;
- Fig. 4 shows a cross section of a spacing element according to the invention; and
- Fig. 5 shows a second view of a glider with a first hinge part according to the invention;
- Fig. 6 shows a third view of a glider with a first hinge part according to the invention; and
- Fig. 7 shows a carrier which can be fitted to the spacing element.

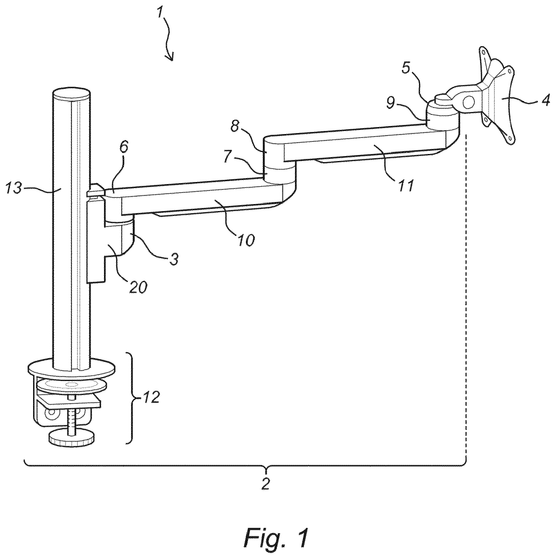

Fig. 1 shows an overall view 1 of a device according to the invention, for mounting a viewing screen (not shown) so as to be displaceable with respect to the outside world. The device comprises a supporting structure 2, for positioning a first hinge part 3 with respect to the outside world (for example the top of a desk), a mounting element 4 configured to be attached (in a manner known per se) to the viewing screen, provided with a second hinge part 5 which can be rotatably connected to the first hinge part 6. According to the present invention, this may be a direct connection, but in the illustrated example this is effected by way of connecting pieces 10 and 11, which are provided with first hinge parts 7, 9 and second hinge parts 6, 8, respectively. In the illustrated example, the supporting structure 2 comprises a connecting element 12 for connecting to a surface, provided with a vertically extending spacing element 12 for positioning the first hinge part 3 at a distance from the surface. The first hinge part is connected to the spacing element 13 by means of a glider 20.

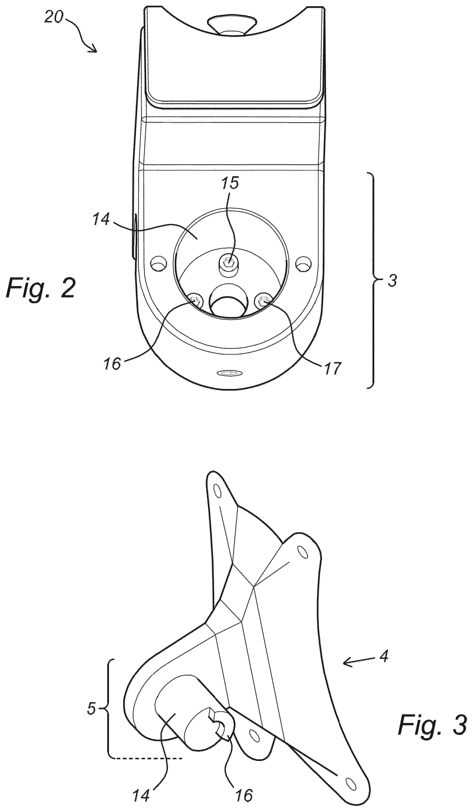

Fig. 2 shows a first view of a glider 20 with a first hinge part 3 according to the invention. The first hinge part 3 comprises a socket 14 and the second hinge part (see Fig. 3) a pin 15, configured to be accommodated in the socket 14. In the device according to the invention, the magnitude of the limited rotation angle can be determined by a position of a displaceable stop 15 which limits the freedom of movement of a cam 16. In the illustrated example, the first hinge part 3 is provided with the displaceable stop 15 and the second hinge part 5 is provided with the cam 16. The displaceable stop 15 is a pin which is axially displaceable with respect to a bore hole, in particular a pin which can be axially screwed into and out of the bore hole, the threaded peripheral wall of the pin of which forms the stop 15. As can be seen, there are several bore holes 16, 17 in which the pin can be placed or in which various pins can be placed. In the illustrated case, the bore holes are provided with socket heads.

Fig. 3 shows a detail of a second hinge part 5 which forms part of the mounting element 5. As can be seen, the second hinge part comprises a pin 14 which is provided with a cam 16. In all embodiments of the present invention, the cam and the displaceable stop are dimensioned in such a way that the rotation angle can be limited by the fact that the displaceable stop can be positioned in such a manner that it blocks the cam.

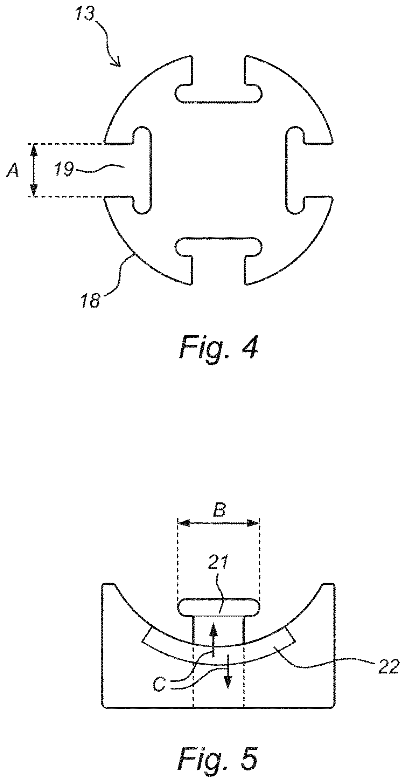

Fig. 4 shows a cross section of a spacing element 13 provided with a slot 19 which extends from an outer surface 18 of the spacing element towards the inside and whose diameter from the outer wall towards the inside comprises a widened section.

Fig. 5 shows a second view of the glider 20 which comprises a slider 21, having a width B which is larger than the smallest diameter A of the slot, wherein the glider comprises a friction element 22 which is configured to glide along an outer surface 18 of the spacing element, wherein the slider is intended to be fitted in the slot and wherein locking comprises mutually displacing the friction element 22 and the slider 21 towards each other with a directional component C. In this case, the slider 21 or the friction element 22 or both may be arranged so as to be movable.

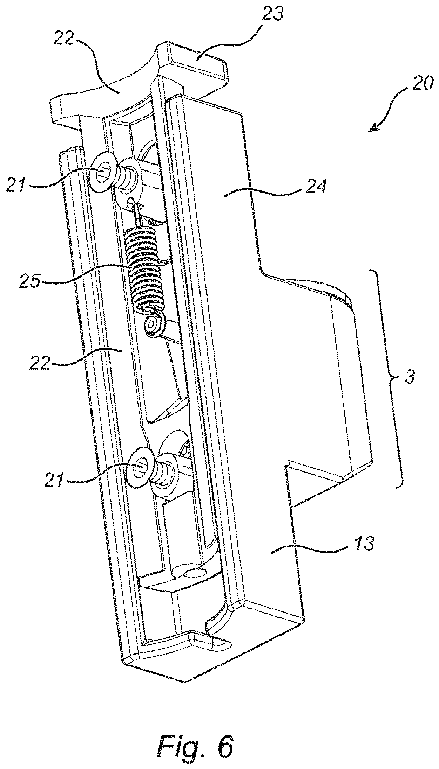

Fig. 6 again shows the glider 20 which comprises a slider 21 (in this case provided in duplicate), wherein the glider 20 also comprises a friction element 22 which is configured to glide along an outer surface of a spacing element. The friction element 22 can be moved with respect to a housing 24 by means of an operating member 23, wherein pushing in the operating member results in both a movement parallel to the sliders 21 and a movement away from the sliders, causing the distance of the slider to the friction element 22 to increase. In a mounted position with the spacing element, pushing in the operating element causes the friction element 22 to be moved away from the outer surface of the spacing element, making a relative movement of the glider and the spacing element possible.

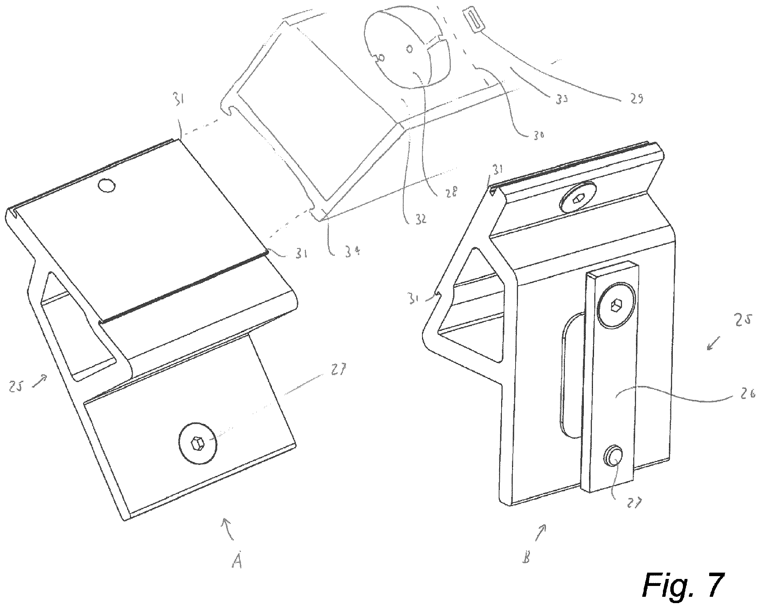

Fig. 7 shows a perspective front and rear view A, B of a carrier 25 for connecting further auxiliary means or peripheral equipment, provided with a slider 26 which is configured to be accommodated in the slot of the spacing element, and which can be latched thereon by tightening clamping screw 27. This makes it possible to attach the carrier 25 to the spacing element 13 at a desired height. Such a carrier for connecting further auxiliary means or peripheral equipment may comprise electrical connections, such as a mains voltage power supply 28, 29, such as a power distribution unit, and may to this end itself be provided with a plug for electrical connection. In addition, low-voltage power supplies may be present, such as a USB charging connection 29.

Preferably, the carrier 25 is designed so that it may be constructed in a modular way and may optionally be provided with the electrical connections or holders for peripheral equipment desired by a user. To this end, the carrier may be provided with a rail 31, in which a holder 34 for modules 32, 33 with respective mains or USB connection can slide. These modules may be configured in any desired manner and may inter alia comprise a carrier for a telephone or laptop.
The examples provided above only serve to illustrate the invention and should by no means be interpreted as limiting the scope of protection as defined in the attached claims.

## Claims

1. Device for mounting a viewing screen so as to be displaceable with respect to the outside world, comprising:
- a supporting structure (2), for positioning a first hinge part (3) with respect to the outside world;
- a mounting element (4) configured to be attached to a viewing screen, provided with a second hinge part (5) which can be rotatably connected to the first hinge part (3);
wherein
- a rotation angle through which the mounting element (4) is rotatable with respect to the supporting structure (2) in a connected position of the first (3) and second (5) hinge part is limited;
- the magnitude of the limited rotation angle is adjustable,
- **characterized in that**
- the magnitude of the limited rotation angle is determined by a position of a displaceable stop (15) which limits the freedom of movement of a cam (16), wherein:
- the first hinge part is provided with the displaceable stop and the second hinge part is provided with the cam, or
- wherein the second hinge part is provided with the displaceable stop and the first hinge part is provided with the cam, the displaceable stop (15) comprises a pin which is axially displaceable with respect to a bore hole, in particular a pin which can be axially screwed into and out of the bore hole.

2. Device according to Claim 1, wherein:
- the first hinge part comprises a socket and the second hinge part comprises a pin, configured to be accommodated in the socket, or wherein:
- the second hinge part comprises a socket and the first hinge part comprises a pin, configured to be accommodated in the socket.

3. Device according to Claim 1, wherein the pin is removable from the bore hole.

4. Device according to Claim 1 or 3, comprising several bore holes in which the pin can be placed or in which various pins can be placed.

5. Device according to Claim 1, 3 or 4, wherein the peripheral wall of the pin forms the stop.

6. Device according to one of the preceding claims, wherein the first hinge part and the second hinge part are connected to each other by way of at least one connecting piece, wherein the connecting piece comprises both a pin configured to be accommodated in a socket and a socket configured for receiving a pin.

7. Device according to one of the preceding claims, wherein the supporting structure comprises a body which can be connected to a vertical wall.

8. Device according to one of the preceding claims, wherein the supporting structure comprises a base in order to rest on a surface or a connecting element for connecting to a surface, provided with a vertically extending spacing element for positioning the first hinge part at a distance from the surface.

9. Device according to Claim 8, wherein the first hinge part is provided on a glider which is connected to the spacing element so as to be moved in translation in the longitudinal direction of the spacing element.

10. Device according to Claim 9, wherein the glider is provided with a lock, for blocking or unblocking, respectively, translation in the longitudinal direction.

11. Device according to Claim 9 and 10, wherein the spacing element is provided with a slot which extends from an outer wall of the spacing element towards the inside and whose diameter from the outer surface towards the inside comprises a widened section, and wherein the glider comprises a slider, having a width which is larger than the smallest diameter of the slot, wherein the glider comprises a friction element which is configured to glide along an outer surface of the spacing element, wherein the slider is arranged in the slot and wherein locking comprises mutually displacing the friction element and the slider towards each other with a directional component.

12. Device according to Claim 11, wherein locking also comprises mutually displacing the friction element and the slider past each other with a directional component.

13. Device according to one of the preceding claims, comprising a connecting piece provided with a movable parallelogram and first and second hinge parts according to the present invention, furthermore provided with an adjustable gas spring provided suitable for compensating for a weight of between 2 and 12 kg for balancing the parallelogram.

## Patentansprüche

1. Vorrichtung zum Montieren eines Betrachtungsschirms, so dass dieser bezüglich der Umwelt verschiebbar ist, umfassend:
- eine Stützstruktur (2) zur Positionierung eines ersten Scharnierteils (3) bezüglich der Umwelt,
- ein Montageelement (4), das zum Anbringen an einem Betrachtungsbildschirm ausgestaltet und mit einem zweiten Scharnierteil (5) versehen ist, der drehbar mit dem ersten Scharnierteil (3) verbunden werden kann,
wobei
- ein Rotationswinkel, in dem das Montageelement (4) bezüglich der Stützstruktur (2) in einer verbundenen Position des ersten (3) und des zweiten (5) Scharnierteils drehbar ist, begrenzt ist,
- die Größe des begrenzten Rotationswinkels verstellbar ist,
**dadurch gekennzeichnet, dass**
- die Größe des begrenzten Rotationswinkels durch eine Position eines verschiebbaren Anschlags (15) bestimmt ist, der die Bewegungsfreiheit eines Nockens (16) begrenzt, wobei:
- der erste Scharnierteil mit dem verschiebbaren Anschlag versehen ist und der zweite Scharnierteil mit dem Nocken versehen ist, oder
- der zweite Scharnierteil mit dem verschiebbaren Anschlag versehen ist und der erste Scharnierteil mit dem Nocken versehen ist,
- der verschiebbare Anschlag (15) einen Stift umfasst, der bezüglich eines Bohrlochs verschiebbar ist, insbesondere einen Stift, der axial in das Bohrloch hinein- und aus diesem herausgeschraubt werden kann.

2. Vorrichtung nach Anspruch 1, wobei:
- der erste Scharnierteil eine Buchse umfasst und der zweite Scharnierteil einen Stift umfasst, der zur Aufnahme in der Buchse ausgestaltet ist, oder wobei:
- der zweite Scharnierteil eine Buchse umfasst und der erste Scharnierteil einen Stift umfasst, der zur Aufnahme in der Buchse ausgestaltet ist.

3. Vorrichtung nach Anspruch 1, wobei der Stift aus dem Bohrloch entfernbar ist.

4. Vorrichtung nach Anspruch 1 oder 3, umfassend mehrere Bohrlöcher, in die der Stift platziert werden kann oder in die verschiedene Stifte platziert werden können.

5. Vorrichtung nach Anspruch 1, 3 oder 4, wobei die Umfangswand des Stifts den Anschlag bildet.

6. Vorrichtung nach einem der vorhergehenden Ansprüche, wobei der erste Scharnierteil und der zweite Scharnierteil mittels mindestens eines Verbindungsteils miteinander verbunden sind, wobei das Verbindungsteil sowohl einen zur Aufnahme in einer Buchse ausgestalteten Stift als auch eine zur Aufnahme eines Stifts ausgestaltete Buchse umfasst.

7. Vorrichtung nach einem der vorhergehenden Ansprüche, wobei die Stützstruktur einen Körper umfasst, der mit einer vertikalen Wand verbunden werden kann.

8. Vorrichtung nach einem der vorhergehenden Ansprüche, wobei die Stützstruktur eine Basis umfasst, um auf einer Fläche zu ruhen, oder ein Verbindungselement zum Verbinden mit einer Fläche, das mit einem sich vertikal erstreckenden Abstandselement versehen ist, um den ersten Scharnierteil mit einem Abstand von der Fläche zu positionieren.

9. Vorrichtung nach Anspruch 8, wobei der erste Scharnierteil an einem Gleitstück vorgesehen ist, das mit dem Abstandselement verbunden ist, um translatorisch in der Längsrichtung des Abstandselements bewegt zu werden.

10. Vorrichtung nach Anspruch 9, wobei das Gleitstück mit einer Verriegelung versehen ist, um die Translation in der Längsrichtung zu blockieren bzw. freizugeben.

11. Vorrichtung nach Ansprüchen 9 und 10, wobei das Abstandselement mit einem Schlitz versehen ist, der sich von einer Außenwand des Abstandselements nach innen erstreckt und dessen Durchmesser von der Außenfläche nach innen einen verbreiterten Abschnitt umfasst, und wobei das Gleitstück einen Schieber mit einer Breite umfasst, die größer als der kleinste Durchmesser des Schlitzes ist, wobei das Gleitstück ein Reibungselement umfasst, das dazu ausgestaltet ist, entlang einer Außenfläche des Abstandselements zu gleiten, wobei das Gleitstück in dem Schlitz angeordnet ist und wobei das Verriegeln umfasst, dass das Reibungselement und der Schieber gegenseitig mit einer Richtungskomponente aufeinander zu verschoben werden.

12. Vorrichtung nach Anspruch 11, wobei das Verriegeln auch umfasst, dass das Reibungselement und der Schieber gegenseitig mit einer Richtungskomponente aneinander vorbei verschoben werden.

13. Vorrichtung nach einem der vorhergehenden Ansprüche, umfassend ein Verbindungsteil, das mit einem beweglichen Parallelogramm versehen ist, und einen ersten und einen zweiten Scharnierteil nach der vorliegenden Erfindung, ferner versehen mit einer verstellbaren Gasfeder, die so bereitgestellt ist, dass sie zum Ausgleichen eines Gewichts zwischen 2 und 12 kg geeignet ist, um das Parallelogramm im Gleichgewicht zu halten.

## Revendications

1. Dispositif de montage d'un écran de visualisation de sorte qu'il puisse être déplacé par rapport au monde extérieur, comprenant:
- une structure de support (2), pour positionner une première partie de charnière (3) par rapport au monde extérieur;
- un élément de montage (4) configuré pour être fixé à un écran de visualisation, pourvu d'une deuxième partie de charnière (5) qui peut être connectée de manière rotative à la première partie de charnière (3);
dans lequel
- un angle de rotation dans lequel l'élément de montage (4) peut tourner par rapport à la structure de support (2) dans une position connectée de la première (3) et de la deuxième (5) partie de charnière est limité;
- l'amplitude de l'angle de rotation limité est réglable,
**caractérisé en ce que**
- l'amplitude de l'angle de rotation limité est déterminée par une position d'une butée déplaçable (15) qui limite la liberté de mouvement d'une came (16), dans lequel:
- la première partie de charnière est pourvue de la butée déplaçable et la deuxième partie de charnière est pourvue de la came, ou
- dans lequel la deuxième partie de charnière est pourvue de la butée déplaçable et la première partie de charnière est pourvue de la came,
- la butée déplaçable (15) comprend une broche qui est déplaçable axialement par rapport à un trou de perçage, en particulier une broche qui peut être vissée axialement pour entrer dans et sortir du trou de perçage.

2. Dispositif selon la revendication 1, dans lequel:
- la première partie de charnière comprend une douille et la deuxième partie de charnière comprend une broche, configurée pour être logée dans la douille, ou dans lequel:
- la deuxième partie de charnière comprend une douille et la première partie de charnière comprend une broche, configurée pour être logée dans la douille.

3. Dispositif selon la revendication 1, dans lequel la broche est amovible du trou de perçage.

4. Dispositif selon la revendication 1 ou 3, comprenant plusieurs trous de perçage dans lesquels la broche peut être placée ou dans lesquels plusieurs broches peuvent être placées.

5. Dispositif selon la revendication 1, 3 ou 4, dans lequel la paroi périphérique de la broche forme la butée.

6. Dispositif selon l'une des revendications précédentes, dans lequel la première partie de charnière et la deuxième partie de charnière sont connectées l'une à l'autre au moyen d'au moins une pièce de connexion, dans lequel la pièce de connexion comprend à la fois une broche configurée pour être logée dans une douille et une douille configurée pour recevoir une broche.

7. Dispositif selon l'une des revendications précédentes, dans lequel la structure de support comprend un corps qui peut être connecté à une paroi verticale.

8. Dispositif selon l'une des revendications précédentes, dans lequel la structure de support comprend une base afin qu'elle repose sur une surface ou un élément de connexion pour qu'elle soit connectée à une surface, pourvue d'un élément d'espacement s'étendant verticalement pour positionner la première partie de charnière à une certaine distance de la surface.

9. Dispositif selon la revendication 8, dans lequel la première partie de charnière est fournie sur un dispositif de glissement qui est connecté à l'élément d'espacement de manière à être déplacé en translation dans le sens longitudinal de l'élément d'espacement.

10. Dispositif selon la revendication 9, dans lequel le dispositif de glissement est pourvu d'un verrou, pour bloquer ou débloquer, respectivement, la translation dans le sens longitudinal.

11. Dispositif selon les revendications 9 et 10, dans lequel l'élément d'espacement est pourvu d'une fente qui s'étend à partir d'une paroi externe de l'élément d'espacement vers l'intérieur et dont le diamètre à partir de la surface externe vers l'intérieur comprend une section élargie, et dans lequel le dispositif de glissement comprend un coulisseau, ayant une largeur qui est supérieure au plus petit diamètre de la fente, dans lequel le dispositif de glissement comprend un élément de friction qui est configuré pour glisser le long d'une surface externe de l'élément d'espacement, dans lequel le coulisseau est agencé dans la fente et dans lequel le verrouillage comprend le déplacement mutuel de l'élément de friction et du coulisseau l'un vers l'autre avec un composant directionnel.

12. Dispositif selon la revendication 11, dans lequel le verrouillage comprend également le déplacement mutuel de l'élément de friction et du coulisseau l'un devant l'autre avec un composant directionnel.

13. Dispositif selon l'une des revendications précédentes, comprenant une pièce de connexion pourvue d'un parallélogramme mobile et de première et deuxième parties de charnière selon la présente invention, pourvue en outre d'un ressort à gaz réglable pourvu de tel sorte qu'il est adapté pour compenser un poids compris entre 2 et 12 kg pour équilibrer le parallélogramme.
